# FASCICULE DE BREVET EUROPEEN

(11) **EP 2 909 592 B1**
(45) Date de publication et mention de la délivrance du brevet: **04.04.2018**
(21) Numéro de dépôt: 13818383.5
(22) Date de dépôt: 16.10.2013
(51) Int. Cl.: G01K 1/02, G01K 7/06, G21C 17/112, G21C 17/00

(54) **DISPOSITIF DE DETECTION DE TEMPERATURE FORMANT CANNE THERMOMETRIQUE**
STABTHERMOMETER ZUR TEMPERATURMESSUNG
ROD THERMOMETER DEVICE FOR DETECTING A TEMPERATURE

(30) Priorité: 17.10.2012 FR 1259890
(43) Date de publication de la demande: 26.08.2015
(73) Titulaire: Commissariat à l'Énergie Atomique et aux Énergies Alternatives, 75015 Paris (FR)
(72) Inventeur: GROS D'AILLON, Luc, F-38320 Brie Et Angonnes (FR); NEISS, Coraline, 38330 Saint-Ismier (FR)
(74) Mandataire: Nony
(86) Numéro de dépôt international: PCT/IB2013/059395
(87) Numéro de publication internationale: WO 2014/060966

(56) Documents cités:
- EP-A1- 0 762 432
- GB-A- 1 059 860
- US-A- 4 326 122

## Description

### Domaine technique

La présente invention concerne un nouveau dispositif de détection de température, formant une canne thermométrique de type multipoints conçu pour détecter des températures à différents points.

L'application principale de l'invention est la détection de l'occurrence de la crise d'ébullition au moyen d'un dispositif de simulation électrique de crayons de combustible nucléaire destinés à être assemblés dans des assemblages par des grilles de maintien et destinés à être utilisés dans des réacteurs dits de puissance, plus particulièrement ceux à eau pressurisée, (abréviation en français REP ou PWR en anglais).

La mise en oeuvre d'un tel dispositif permet la qualification thermo-hydraulique des crayons de combustible nucléaire, en particulier en détectant l'occurrence de la crise d'ébullition du liquide dans lequel ils sont destinés à être immergés dans des conditions réprésentatives d'un fonctionnement de réacteur nucléaire. L'occurrence et la localisation de la crise d'ébullition doivent être détectés dans les dispositifs de simulation électrique avec des temps de réponse permettant l'activation de systèmes de sécurité.

L'invention vise de manière générale à détecter, à l'aide d'un même dispositif, des températures en différents points répartis selon une pluralité de positions axiales et azimutales, en particulier réparties selon une densité spatiale élevée.

Bien que décrite en référence à l'application principale, le dispositif de détection de température selon l'invention peut être utilisé pour détecter différentes températures ou gradients de températures en différents points d'une même paroi à surveiller, les températures en chaque point étant détectées par rayonnement thermique.

### Art antérieur

Pour qualifier un assemblage de crayons de combustible nucléaire destiné à être utilisé dans un réacteur nucléaire de puissance à eau pressurisée (REP), il est nécessaire de procéder à des essais de crise d'ébullition. Plus précisément, il faut pouvoir détecter l'occurrence et la localisation de la crise d'ébullition. En effet, la crise d'ébullition peut être définie de manière générale comme une excursion importante de température de paroi pour une faible variation des paramètres thermo-hydrauliques de contrôle. Elle se traduit concrètement par la dégradation brutale de l'échange thermique entre une paroi chauffante et le fluide caloporteur qui l'entoure, c'est-à-dire une élévation brutale de température de paroi. Ainsi, dans un réacteur REP, l'occurrence de ce phénomène pourrait conduire à la rupture de gaine d'un crayon de combustible nucléaire.

Autrement dit, les assemblages de crayons de combustible nucléaire doivent être qualifiés vis-à-vis de la crise d'ébullition pour permettre d'évaluer les marges en fonctionnement nominal, incidentel ou en transitoire de pilotage, et limiter le risque d'endommagement des gaines des crayons qui constituent la première barrière de confinement du combustible.

Cette qualification consiste à définir expérimentalement l'occurrence et la localisation de la crise d'ébullition au moyen de dispositifs de simulation électrique de crayon de combustible nucléaire à flux thermique élevé. La mise en oeuvre d'un dispositif de simulation consiste, en écoulement quasi permanent du liquide dans lequel il est immergé, à faire évoluer lentement un seul paramètre thermo-hydraulique, tout en régulant les autres paramètres sur des valeurs fixes prédéterminées, jusqu'à atteindre la crise d'ébullition.

En ce qui concerne les dispositifs de simulation électrique de crayon de combustible nucléaire à flux thermique élevé utilisés, la plupart de ceux utilisés sont de type à chauffage direct car la gaine du dispositif directement en contact avec l'eau chauffée constitue également l'élément à fonction de résistor. Autrement dit, la gaine est chauffée directement.

La demanderesse a également proposé dans la demande de brevet FR 11 54336 déposée le 18 Mai 2011, un dispositif de simulation électrique à chauffage indirect permettant notamment de qualifier des assemblages de combustible nucléaire destinés à être immergés dans un caloporteur conducteur électrique, tels que ceux des futurs réacteurs nucléaires à neutrons rapides (RNR) dits de IVème génération, dont le fonctionnement est assuré avec un caloporteur sodium (RNR-Na) et qui vont nécessiter des essais d'ébullition en sodium à flux thermique élevé.

Quel que soit le type de dispositif de simulation électrique, la détection de l'occurrence la crise d'ébullition et sa localisation nécessitent une forte densité spatiale de mesure avec des contraintes de temps de réponse très courts pour la mise en sécurité et des contraintes d'accès très restreint du fait de la constitution même des dispositifs avec des tubes de faible diamètre. En particulier, la forte densité spatiale de mesure est dictée par le flux thermique élevé avec un profil axial en général non uniforme, imposé par la neutronique. Les grilles sont de forme, dimensions et positions axiales identiques à celles d'un assemblage dans un réacteur.

Jusqu'à présent, dans les dispositifs de simulation à chauffage direct en pratique des thermocouples gainés en acier ou un autre matériau analogue sont soudés directement sur la gaine chauffante aux points à contrôler, c'est-à-dire dans des zones où la crise d'ébullition est attendue. Les inconvénients de cette technique sont nombreux et peuvent être énumérés comme suit :
limitation importante du nombre de points de mesure du fait de l'espace disponible pour les thermocouples très restreint dans le dispositif,
   - perturbation localement possible du courant de chauffe de la gaine et donc du flux thermique et par là du phénomène d'ébullition observé,
   - coût relativement élevé en investissement et main d'oeuvre pour la réalisation des points de mesure, plus particulièrement en cas de nombre d'essais important,
   - impossibilité de récupération de l'instrumentation de mesure et des gaines chauffantes.

La demande EP 0 762 432 A1 divulgue un dispositif de détection et de surveillance du percement du fond de la cuve d'un réacteur nucléaire comportant au moins un thermocouple.

Dans le dispositif de simulation à chauffage indirect de la demande de brevet FR 11 54336 précitée, la demanderesse a proposé d'insérer chacun d'une pluralité de thermocouples, dans une rainure pratiquée sur la périphérie externe de la gaine non chauffante et en contact direct avec le liquide à chauffer, avec l'avantage afférent de pouvoir positionner avec une grande précision les thermocouples. Le nombre de points de mesure reste tout de même limité, le coût de réalisation des points de mesure élevé, et il subsiste toujours l'inconvénient de la non récupération possible de l'instrumentation de mesure et des gaines instrumentées.

Il est connu par ailleurs des dispositifs de détection de température, couramment appelés cannes thermométriques/pyrométriques multipoints qui comportent des éléments sensibles à la témpérature, tels que résistances thermométriques, couples thermoélectriques ou thermistances, logés dans une gaine de protection. Ces cannes thermométriques ont pour avantage de pouvoir être implantées in-situ, de ne pas impacter physiquement la ou les parois d'objet sur lequel on détecte les températures et de pouvoir être récupérées après mesure des températures. Cela étant, les cannes thermométriques actuellement existantes ne permettent pas d'avoir une densité spatiale de mesure très élevée, sont d'un coût relativement élevé et ne peuvent être réellement implantées dans des zones dans lesquelles l'espace disponible, autrement dit l'accès est très restreint.

Il existe donc un besoin d'améliorer les techniques et dispositifs de détection de température existants, notamment en vue d'obtenir une plus grande densité spatiale de mesure, même dans des zones à espace disponible accès très restreint, de diminuer les coûts d'instrumentation de mesure de paroi à surveiller, et de pouvoir récupérer et utiliser à nouveau toutes les parties d'instrumentation de mesure et de parois à surveiller, telles que les gaines chauffantes ou non des dispositifs de simulation électrique des crayons de combustible nucléaire.

Le but général de l'invention est donc de proposer un nouveau dispositif de détection de température qui réponde au moins partiellement à ce besoin.

Un but particulier de l'invention est de proposer un dispositif de détection de température qui puisse être utilisé dans un dispositif de simulation électrique d'un crayon de combustible nucléaire.

### Exposé de l'invention

Pour ce faire, l'invention a pour objet, sous un de ses aspects un dispositif de détection de température, formant canne thermométrique, comportant :
- une pluralité d'éléments sensibles à la température,
- une gaine de protection d'axe longitudinal X dans laquelle sont logés en partie les éléments sensibles,
caractérisé en ce que la gaine est en un métal constituant un des deux métaux d'un thermocouple, et en ce que les éléments sensibles consistent en une pluralité de fils en un métal différent de celui de la gaine et constituant l'autre des deux métaux d'un thermocouple, une des extrémités de chacun des fils étant soudée à l'intérieur de la gaine en formant une jonction de mesure d'un thermocouple donné, les extrémités soudées des fils étant réparties selon une pluralité de positions axiales et azimutales relativement à l'axe X à l'intérieur de la gaine, chacun des fils sortant de la gaine par au moins une de ses extrémités.

Autrement dit, l'invention consiste à conférer à une gaine d'une canne thermométrique qui n'a pour fonction selon l'état de l'art que de protéger les éléments sensibles, une autre fonction à savoir la fonction d'un métal commun à une pluralité de thermocouples, l'autre métal de chacun des thermocouples étant celui d'un fil soudé directement à la gaine, les fils étant répartis selon une pluralité de positions axiales et azimutales.

Autrement dit encore, selon l'invention, on utilise le métal de la gaine comme un des deux métaux d'un thermocouple et comme commun pour tous les thermocouples, on détecte une température de paroi par rayonnement thermique en un point donné par un seul fil en l'autre métal d'un thermocouple.

Grâce à l'invention, il est possible de détecter les températures jusqu'à plusieurs centaines de zones par objet à surveiller, tel qu'un simulateur électrique de crayon de combustible nucléaire, pour des coûts d'instrumentation de mesure relativement faibles. La canne thermométrique selon l'invention est, par ailleurs, indépendante de l'objet à surveiller, elle peut ainsi que les objets à surveiller tels que les gaines chauffantes des dispositifs de simulation électrique, donc être réutilisés de nombreuses fois.

En d'autres termes, la canne thermométrique selon l'invention apporte de nombreux avantages comparativement aux techniques de détection selon l'état de l'art :
- augmentation du nombre de points de détection de température, typiquement plusieurs par centimètre linéaire,
- absence de perturbation locale du flux thermique par les thermocouples,
- diminution importante du coût de l'instrumentation de mesure,
- récupération aisée de la canne thermométrique et des objets à surveiller, tels que les gaines chauffantes,
- adaptabilité de la détection de température à des conditions d'environnement très différentes du fait de la densité spatiale très importante des points de détection,

De préférence, le métal de la gaine est un matériau de type K.

De préférence encore, le métal des fils est un matériau de type K.

Ainsi, selon une variante de réalisation préférée, la gaine est soit en chromel, soit en alliage nickel-chrome, tel que l'Inconel® 600, et les fils sont en alumel. De tels thermocouples de type K ont l'avantage de donner des températures dans une large plage et d'être de faible coût.

Selon une caractéristique avantageuse, les fils sont recouverts d'un isolant électrique hormis leurs extrémités de jonction. Ainsi, on isole électriquement chaque thermocouple par rapport aux autres et par rapport à la gaine. Selon une variante de réalisation préférée, les fils en alumel sont recouverts d'un dépôt d'alumine.

De préférence, l'épaisseur de la gaine est inférieure ou égale à 0,1 mm.

De préférence encore, le diamètre externe des fils est inférieur ou égal à 0,1 mm. Avec ces dimensions, l'inertie thermique d'un point de mesure à la jonction d'un fil et de la gaine est relativement faible, ce qui conduit à des temps de réponse relativement courts. On peut ainsi détecter l'occurrence de la crise d'ébullition très rapidement. Typiquement, dans un dispositif de simulation électrique à chauffage direct, pour une température de la gaine chauffante inférieure à 750°C et une montée en température de cette dernière de l'ordre de 1000°C par seconde, les inventeurs pensent qu'il est possible grâce à la canne thermométrique selon l'invention de détecter des variations de température supérieures au seuil de détection déterminé, typiquement supérieur à 10°C, en un temps inférieur à 100 ms. La crise d'ébullition dans un dispositif de simulation électrique d'un crayon de combustible nucléaire est ainsi détectée dès que ces variations de températures sont supérieures au seuil déterminé, au moins égal à 10°C.

Selon une caractéristique avantageuse, la canne thermométrique comporte au moins un tube-raccord réalisé dans le même métal que la gaine et de plus grand diamètre externe que celui de la gaine, le tube raccord étant brasé autour de la gaine du côté de la sortie des fils métalliques. On peut ainsi réaliser un montage plus aisé de la canne thermométrique dans une gaine chauffante.

L'invention a également pour objet, sous un autre de ses aspects, un procédé de fabrication de la canne thermométrique qui vient d'être décrite, comportant les étapes suivantes :
- découpe longitudinale selon deux génératrices opposées d'un tube en un métal constituant un des deux métaux d'un thermocouple, de sorte à former deux demi-tubes,
- soudage d'une extrémité de chacun de la pluralité de fils en un métal constituant un des deux métaux d'un thermocouple, à l'intérieur d'au moins un demi-tube, les extrémités des fils soudées étant réparties selon une pluralité de positions axiales et azimutales,
- reconstitution du tube métallique formant la gaine par soudage sur chaque génératrice en laissant sortir la pluralité de fils métalliques par au moins une de ses extrémités.

Un tel procédé de fabrication est simple à mettre en oeuvre notamment du fait de l'accès aisé à l'intérieur des demi-tubes. Chaque fil métallique peut être également facilement être déroulé depuis des bobines usuelles d'une centaine de mètres de fil.

De préférence, le soudage de l'une des extrémités de fils avec au moins un demi-tube est réalisé par décharge électrique.

De préférence encore, le soudage de reconstitution est réalisé par points. Ces techniques de soudage bien maitrisées permettent la réalisation des jonctions de mesure très précises.

L'invention concerne également sous un autre aspect un procédé d'installation du dispositif de détection de température qui vient d'être décrit dans un dispositif de simulation électrique d'un crayon de combustible nucléaire comportant au moins un tube en matériau conducteur électrique, dit tube chauffant, destiné à chauffer un liquide, afin de détecter l'occurrence d'une crise d'ébullition du liquide, selon lequel on agence à l'intérieur et à distance du tube chauffant du dispositif de simulation électrique, la gaine formant le métal commun des thermocouples, on remplit d'un gaz isolant pressurisé l'espace entre la gaine et le tube chauffant et on réalise une étanchéité de l'espace rempli de gaz isolant pressurisé.

Selon une variante de réalisation avantageuse, afin d'éviter des risques de court-circuit, on réalise l'agencement à distance au moyen d'entretoises en matériau isolant électrique, telles que des entretoises en céramique, fixées à l'extérieur de la gaine logeant les fils soudés et montées avec jeu avec l'intérieur du tube chauffant, dans des zones dépourvues de fils. Le jeu entre entretoises et l'intérieur du tube correspond à un jeu de montage augmenté d'un jeu de reprise de dilatation thermique.

Selon une variante de réalisation avantageuse, pour diminuer le temps de réponse de la détection de température, on réalise au préalable de l'agencement, un traitement de l'intérieur du tube chauffant et/ou de l'extérieur de la gaine de sorte à lui (leur) conférer une émissivité thermique au moins égale à 0,8.

Le traitement peut consister avantageusement soit en un traitement d'oxydation contrôlé du tube, de préférence par chauffage en atmosphère oxydante, soit en un revêtement d'un matériau à émissivité thermique élevée, telle qu'une peinture noire.

L'invention a enfin pour objet l'utilisation d'une canne thermométrique selon l'invention qui vient d'être décrite installée selon le procédé décrit ci-avant pour détecter l'occurrence d'une crise d'ébullition.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en coupe longitudinale d'un dispositif de simulation électrique d'un crayon de combustible nucléaire de type à chauffage direct dans lequel est installée une canne thermométrique selon l'invention;
- la figure 2 est une vue schématique en coupe longitudinale d'un dispositif de simulation électrique d'un crayon de combustible nucléaire de type à chauffage indirect dans lequel est installée une canne thermométrique selon l'invention;
- la figure 3 est une vue schématique montrant en détail la canne thermométrique selon l'invention telle qu'elle est installée dans un dispositif de simulation électrique à chauffage direct selon la figure 1.

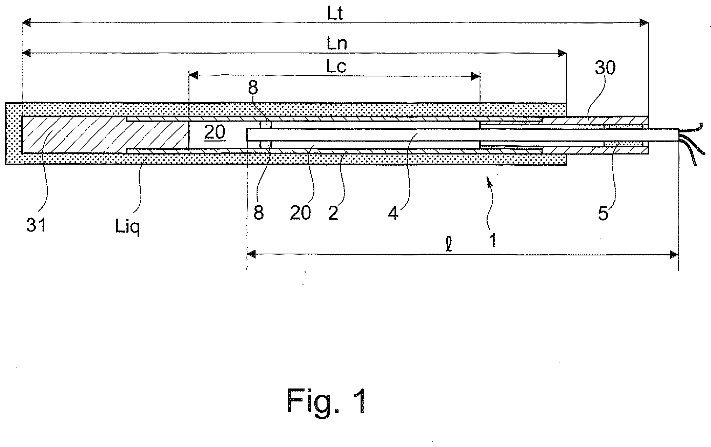

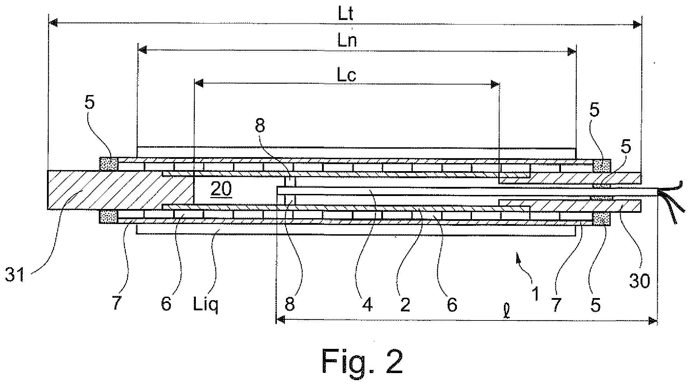

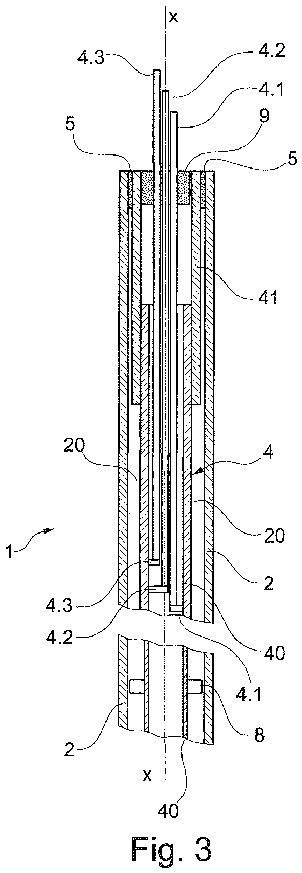

On précise ici que les dispositifs de simulation électrique de type à chauffage direct (figures 1 et 3) et à chauffage indirect comme décrit et revendiqué dans la demande de brevet FR 11 54336 (figure 2) doivent permettre de détecter l'occurrence de la crise d'ébullition définie comme une excursion importante de température de paroi pour une faible variation des paramètres thermo hydrauliques de contrôle.

On précise encore que sur l'ensemble des figures 1 à 3, les références Lt, Ln et Lc, 1 désignent respectivement :
Lt : longueur hors tout du dispositif de simulation électrique ;
Ln : longueur du dispositif immergée dans le liquide ;
Lc : longueur chauffante du dispositif ;
l : longueur hors tout de la canne thermométrique.

On peut noter que le montage du dispositif de simulation électrique à chauffage direct (figures 1 et 3) prévoit d'immerger une connexion électrique dans le liquide à chauffer (Liq) tandis que le montage d'un dispositif de simulation électrique à chauffage indirect (figure 2) permet de n'immerger aucune connexion électrique, ce qui est avantageux car il n'y a pas lieu de réaliser une isolation électrique sophistiquée par rapport à l'environnement extérieur.

On précise encore que pour réaliser les essais de crise d'ébullition, un dispositif de simulation électrique dans lequel est installée une canne thermométrique selon l'invention est agencé au sein d'un assemblage (non représenté) d'une pluralité de dispositifs identiques avec grilles de maintien à l'intérieur d'une cuve (non représentée) contenant le liquide à chauffer, les deux connexions électriques faisant saillie de la cuve en étant isolées de celle-ci par des moyens adaptés et le résistor tubulaire est alimenté en courant continu. Pour des réacteurs à eau pressurisée, le liquide à chauffer est l'eau. Pour d'autres applications, le liquide à chauffer peut être différent. Typiquement, pour les réacteurs à neutrons rapides RNR-Na, le liquide à chauffer est du sodium.

Pour ces essais de crise d'ébullition les paramètres suivants sont imposés sur chaque dispositif de simulation électrique :
- longueur chauffante Lc, typiquement de 1 à 4,3 mètres,
- profil axial de flux thermique par crayon, typiquement de 0,2 à 3,5 MW/m²,
- diamètre externe de gaine extérieure typiquement de 8,5 à 10,7 mm ;
- alimentation électrique totale, typiquement de 250V avec un gradient local maximal égal à 100V/m.

De même, pour ces essais, les paramètres suivants sont imposés sur l'assemblage entre eux de plusieurs dispositifs de simulation électrique :
- le type et les positions des grilles de maintien, définissant le type et le pas du réseau d'un assemblage,
- avec un nombre réduit de dispositifs par assemblage, typiquement un nombre de 19 à 37.

Les conditions de fonctionnement interne du dispositif de simulation électrique sont les suivantes :
- température de fonctionnement en interne en régime permanent : 450°C
- température de fonctionnement en interne lors du passage en crise d'ébullition: 800°C ;
- pression interne en gaz neutre : 180 bars.

Par souci de clarté, des mêmes éléments d'un dispositif à chauffage direct et à chauffage indirect portent les mêmes références.

En figure 1 est représenté un dispositif de simulation électrique, usuellement dénommé à chauffage direct. Le dispositif 1 est constitué d'un résistor 2 sous la forme d'un tube qui sert également de gaine. Autrement dit, la gaine tubulaire 2 a également la fonction de résistor électrique, c'est-à-dire la pièce alimentée en courant pour chauffer le liquide dans lequel le dispositif est immergé. L'intérieur 20 du résistor/gaine tubulaire 2 est rempli d'azote pressurisé. Deux connexions électriques 30, 31 sont emmanchées chacune dans une des extrémités de la gaine/résistor 2. L'une des connexions 30 est celle d'alimentation du courant : elle est percée en son centre pour loger la canne thermométrique 4 selon l'invention d'axe longitudinal X qui s'étend longitudinalement selon l'axe du dispositif à l'intérieur de la gaine chauffante 2 dans l'espace occupé par le gaz isolant pressurisé 20, comme détaillé ci-après.

De ce côté, l'étanchéité de l'azote pressurisé à l'intérieur 20 de la gaine chauffante 2 est assurée à la fois par la connexion 30 elle-même et par un bouchon d'extrémité 5 en matériau isolant électrique. L'autre 31 des connexions est celle de sortie du courant : elle est pleine et sert donc également de bouchon d'étanchéité.

En figure 2 est représenté un dispositif 1 de simulation électrique à chauffage indirect comme décrit et revendiqué dans la demande de brevet FR 11 54336. Il consiste essentiellement en :
- un résistor 2 de même type de résistor tubulaire que celui du dispositif 1 à chauffage direct, représenté en figure 1, pour avoir un flux thermique élevé avec un profil axial imposé uniquement par la variation d'épaisseur du résistor et un profil transversal homogène, c'est-à-dire sans variation azimutale,
- des dimensions radiales du résistor tubulaire réduites pour l'isoler électriquement par un élément intermédiaire 6 isolant électriquement rajouté mais conducteur thermique, de préférence avec un coefficient de conduction thermique très élevé,
- une gaine 7 en matériau conducteur thermique qui chemise l'ensemble résistor tubulaire 2 / élément intermédiaire 6, le diamètre externe de ladite gaine étant celui imposé comme indiqué ci-dessus (8,5 à 10,7 mm), c'est-à-dire celui des gaines de crayons de combustible nucléaires destinés à des réacteurs REP,
- une canne thermométrique 4 selon l'invention installée à l'intérieur du résistor 2 dans l'espace occupé par le gaz isolant pressurisé 20.

En outre, on alimente, par la connexion 30, le résistor tubulaire 2 en courant continu. Pour les autres applications que la qualification du combustible nucléaire, l'alimentation électrique peut être faite en courant alternatif monophasé.

Le mode de réalisation de la figure 2 prévoit en tant qu'élément intermédiaire isolant électriquement et conducteur thermique une colonne de pastilles 6 en matériau céramique percées en leur centre, empilées les unes sur les autres, et emmanchées autour du résistor tubulaire 2 sur toute sa longueur et sur une partie des connexions électriques 30, 31.

Dans les dispositifs de simulation électrique 1 qui viennent d'être décrits, avec les paramètres et conditions de fonctionnement en interne imposées, une crise d'ébullition pour laquelle le coefficient d'échange tombe à une très basse valeur, le transitoire de température de la paroi de gaine externe 2, 7 est de 1750 K/s avec une marge de 300 K.

La puissance électrique d'alimentation de l'élément chauffant 2 doit être coupée avec un temps caractéristique de décroissance inférieur à 170 ms, ce qui, compte tenu des caractéristiques de la commande de puissance, laisse de l'ordre de 100 ms pour le temps caractéristique de détection.

Jusqu'à présent, selon l'état de l'art antérieur, les dispositifs de détection de température pour détecter la crise d'ébullition dans les dispositifs de simulation électrique consistaient en des thermocouples, par exemple au nombre de huit thermocouples de type K gainés en inconel 600, agencés chacun en contact avec la gaine extérieure 2 ou 7 selon différentes positions axiales et azimutales à des endroits spécifiés avec une tolérance de +/- 2 mm. Dans un dispositif 1 à chauffage direct, analogue à celui représenté à la figure 1, les thermocouples étaient soudés directement à la gaine chauffante 2. Dans un dispositif 1 à chauffage indirect, analogue à celui décrit dans la demande de brevet FR 11 54336 et représenté en figure 2, il a été prévu d'insérer les thermocouples dans des rainures ménagées à l'extérieur de la gaine 7.

Les endroits spécifiés pour l'agencement avec contact direct des thermocouples selon l'état de l'art correspondaient aux zones dans lesquelles la crise d'ébullition était susceptible de se produire.

Avec une telle méthode de détection selon l'état de l'art, le nombre de points de détection de température était ainsi limité, typiquement à une dizaine par dispositif 1, essentiellement pour des raisons de coûts relativement importants en investissement et main d'oeuvre d'installation.

En outre, une fois les essais réalisés, d'une part les thermocouples proprement dits et d'autre part les gaines externes 2 ou 7 étaient inutilisables.

Pour pallier à ces inconvénients, les inventeurs de la présente invention ont pensé à réaliser une canne thermométrique 4 comme montré en figure 3.

La canne 4 selon l'invention comporte une gaine 40 de protection en un métal constituant un des deux métaux d'un thermocouple.

Une pluralité de fils 4.1, 4.2, 4.3 en un métal différent de celui de la gaine et constituant l'autre des deux métaux d'un thermocouple est logée à l'intérieur de la gaine 40.

Une des extrémités de chacun des fils 4.1, 4.2, 4.3 est soudée à l'intérieur de la gaine en formant une jonction de mesure d'un thermocouple donné, les extrémités soudées des fils étant réparties selon une pluralité de positions axiales et azimutales relativement à l'axe X à l'intérieur de la gaine, chacun des fils sortant de la gaine par au moins une de ses extrémités.

Ainsi, à chaque position axiale et azimutale devant être surveillée pour détecter la crise d'ébullition, une extrémité d'un fil 4.1, 4.2, 4.3 est soudée.

De préférence, le métal de la gaine de protection 40 et celui des fils 4.1, 4.2, 4.3 forment des thermocouples de type K.

Les fils métalliques 4.1, 4.2, 4.3 sont de préférence recouverts d'un revêtement isolant électrique afin de les isoler entre eux et par rapport à la gaine 40 (en dehors des jonctions).

Comme montré en figure 3, la gaine est de préférence en deux parties 40, 41 avec celle supérieure de plus grand diamètre brasée autour de celle inférieure. La partie supérieure 41 constitue ainsi un raccord et permet un montage plus aisé sur la connexion 30.

Pour réaliser la canne thermométrique 4 selon l'invention, on peut procéder avantageusement de la manière suivante :
- découpe longitudinale selon deux génératrices opposées d'un tube 40 en un métal constituant un des deux métaux d'un thermocouple, de sorte à former deux demi-tubes,
- soudage d'une extrémité de chacun de la pluralité de fils 4.1, 4.2, 4.3 en un métal constituant un des deux métaux d'un thermocouple, à l'intérieur d'au moins un demi-tube, les extrémités des fils soudées étant réparties selon une pluralité de positions axiales et azimutales (figure 3),
- reconstitution du tube métallique formant la gaine par soudage sur chaque génératrice en laissant sortir la pluralité de fils métalliques par au moins une de ses extrémités. Le soudage de l'une des extrémités de fils 4.1, 4.2, 4.3 avec au moins un demi-tube est réalisé par décharge électrique et le soudage de reconstitution est réalisé par points.

On peut prévoir un embout étanche brasé ou soudé au tube métallique reconstitué 40 dans sa partie inférieure.

Pour procéder au montage de la canne thermométrique à l'intérieur soit de la gaine chauffante externe 2 (dispositif 1 à chauffage direct de la figure 1) soit du résistor interne 2 (dispositif 1 à chauffage indirect de la figure 2), on agence à l'intérieur et à distance de ce tube chauffant 2, la gaine 40 formant le métal commun des thermocouples, on remplit d'un gaz isolant pressurisé 20 l'espace entre la gaine et le tube chauffant et on réalise une étanchéité de l'espace rempli de gaz isolant 20 pressurisé au moyen d'un ou plusieurs éléments électriquement isolant 5. Pour réaliser l'étanchéité au niveau d'un élément électriquement isolant 5, telle qu'une cale en céramique, on peut avantageusement réaliser une brasure métal/céramique/métal d'une part avec le tube-raccord 41 et d'autre part avec le tube 2. Par ailleurs pour assurer un maintien mécanique de la canne thermométrique 4 dans le tube 2, on peut réaliser un raccordement mécanique métal/métal entre le tube-raccord 41 et le tube 2en dessous de la cale 5 isolante électrique.

Pour éviter les risques de court-circuit, la gaine 40 est munie d'entretoises ou cales 8 en matériau isolant électrique, telles que des céramiques, dans des zones hors des jonctions de mesure. Ces cales 8 fixées sur l'extérieur de la gaine 40 sont dimensionnées pour être montées avec jeu avec l'intérieur du tube chauffant 2. Le jeu entre cales 8 et l'intérieur du tube correspond à un jeu de montage augmenté d'un jeu de reprise de dilatation thermique.

Pour améliorer le temps de réponse de l'instrumentation de mesure, l'émissivité de la face interne du tube chauffant 2 peut être augmentée de manière à être supérieure à une valeur de 0,8. De même, l'émissivité de la face externe de la gaine peut être augmentée à une valeur supérieure à 0,8.

Dans la partie supérieure 41 de la canne thermométrique selon l'invention on peut réaliser une étanchéité 9 entre les fils métalliques 4.1, 4.2, 4.3 et la gaine 41 qui permet également de maintenir en position lesdits fils.

A titre d'exemple, on donne ci-après les dimensions et matériaux des dispositifs 1 complets et de la canne thermométrique 4 selon l'invention.

### Dimensions :

- dispositif 1 complet :
   - Longueur immergée Ln : 1,2 à 4,5 m ;
   - Longueur totale Lt : 1,5 a 4,8 m
- gaine externe 2 ou 7 :
   - Diamètre externe : 8,5 à 10,7 mm,
   - Epaisseur : ∼ 1 mm avec une valeur de 0,5mm au pic de flux de puissance égal à 3,5MW/m²,
- résistor 2 :
   - Longueur chauffante Lc: 1 à 4,3 m,
   - Diamètre externe inférieur d'environ 0,5mm au diamètre interne de la gaine 7
   - Diamètre interne selon la résistance électrique considérée,
- pastilles 6 en céramique
   - Épaisseur : environ 2 mm,
- cales 8 :
   - Diamètre externe 4,9 mm
   - Diamètre interne : 4 mm
   - Hauteur : 10 mm.
- canne thermométrique 4 selon l'invention:
   - Longueur 1 hors tout : 1 à 3 m
   - Diamètre externe : 4 mm
      gaine de protection 40
   - Epaisseur : 0,1 mm.
      fils métalliques 4.1, 4.2, 4.3...
   - Diamètre: 0,1mm

### Matériaux :

- gaine 7 : Inconel 600 ou acier inoxydable 316 L,
- résistor 2 : Inconel 600 ou cupronickel 70/30,
- pastilles 6 empilées en nitrure de bore ou en nitrure d'aluminium et revêtement céramique 22 en zircone,
- connexions électrique 30, 31: cuivre, nickel ou molybdène,
- élément d'étanchéité 5 : cale en céramique brasée d'une part au tube 2 et d'autre part à la au tube-raccord 41,
- éléments d'étanchéité 9 électriquement isolants: résine ou silicone,
- cales 8 : alumine ou zircone,
- canne thermométrique 4 selon l'invention :
   gaine de protection 40 : chromel ou Inconel® 600,
      fils 4.1, 4.2, 4.3 : alumel recouvert d'alumine

Avec les dimensions et matériaux indiqués pour la constitution de la canne thermométrique 4 selon l'invention, l'inertie thermique de celle-ci est relativement faible, ce qui conduit à des temps de réponse relativement courts. Typiquement, pour une montée en température de la gaine 2 de 1000°C/s, un seuil de détection fixé supérieur à 10°C est franchi par la canne thermométrique 4 en moins de 100 ms pour une température de gaine 2 inférieure à 750 °C.

Bien que décrit exclusivement en tant que dispositif de simulation électrique d'un crayon de combustible nucléaire pour réaliser des essais de crise d'ébullition, le dispositif selon l'invention qui vient d'être décrit aux figures 2 et 3 peut tout aussi bien constituer de manière plus générale à la détection de température d'une paroi pour laquelle une haute densité de mesure est requise selon les directions axiale et azimutales.

## Revendications

1. Dispositif de détection de température, formant canne thermométrique (4), comportant :
- une pluralité d'éléments sensibles à la température,
- une gaine de protection d'axe longitudinal X dans laquelle sont logés en partie les éléments sensibles,
**caractérisé en ce que** la gaine (40) est en un métal constituant un des deux métaux d'un thermocouple, et **en ce que** les éléments sensibles consistent en une pluralité de fils (4.1, 4.2, 4.3...) en un métal différent de celui de la gaine et constituant l'autre des deux métaux d'un thermocouple, une des extrémités de chacun des fils étant soudée à l'intérieur de la gaine en formant une jonction de mesure d'un thermocouple donné, les extrémités soudées des fils étant réparties selon une pluralité de positions axiales et azimutales relativement à l'axe X à l'intérieur de la gaine de façon à permettre une densité de mesure de plusieurs points par centimètre linéaire, chacun des fils sortant de la gaine par au moins une de ses extrémités.

2. Canne thermométrique selon la revendication 1, dans laquelle le métal de la gaine est un matériau de type K.

3. Canne thermométrique selon la revendication 1 ou 2, dans laquelle le métal des fils est un matériau de type K.

4. Canne thermométrique selon la revendication 2 en combinaison avec la revendication 3, dans laquelle la gaine est soit en chromel, soit en alliage nickel-chrome, tel que l'Inconel® 600, et les fils sont en alumel.

5. Canne thermométrique selon l'une des revendications précédentes, dans laquelle les fils sont recouverts d'un isolant électrique hormis leurs extrémités de jonction.

6. Canne thermométrique selon la revendication 5 en combinaison avec la revendication 4, dans laquelle les fils en alumel sont recouverts d'un dépôt d'alumine.

7. Canne thermométrique selon l'une des revendications précédentes, dans laquelle l'épaisseur de la gaine est inférieure ou égale à 0,1 mm.

8. Canne thermométrique selon l'une des revendications précédentes, dans laquelle le diamètre externe des fils est inférieur ou égal à 0,1 mm.

9. Canne thermométrique selon l'une des revendications précédentes, comportant au moins un tube-raccord (41) réalisé dans le même métal que la gaine et de plus grand diamètre externe que celui de la gaine, le tube raccord étant brasé autour de la gaine du côté de la sortie des fils métalliques.

10. Procédé de fabrication de la canne thermométrique selon l'une des revendications précédentes, comportant les étapes suivantes :
- découpe longitudinale selon deux génératrices opposées d'un tube (40) en un métal constituant un des deux métaux d'un thermocouple, de sorte à former deux demi-tubes,
- soudage d'une extrémité de chacun de la pluralité de fils (4.1, 4.2, 4.3..) en un métal constituant un des deux métaux d'un thermocouple, à l'intérieur d'au moins un demi-tube, les extrémités des fils soudées étant réparties selon une pluralité de positions axiales et azimutales,
- reconstitution du tube métallique formant la gaine par soudage sur chaque génératrice en laissant sortir la pluralité de fils métalliques par au moins une de ses extrémités.

11. Procédé de fabrication selon la revendication 10, selon lequel le soudage de l'une des extrémités de fils avec au moins un demi-tube est réalisé par décharge électrique.

12. Procédé de fabrication selon la revendication 10 ou 11, selon lequel le soudage de reconstitution est réalisé par points.

13. Procédé d'installation du dispositif de détection de température (4) selon l'une des revendications 1 à 9 dans un dispositif (1) de simulation électrique d'un crayon de combustible nucléaire comportant au moins un tube en matériau conducteur électrique, dit tube chauffant, destiné à chauffer un liquide, afin de détecter l'occurrence d'une crise d'ébullition du liquide, selon lequel on agence à l'intérieur et à distance du tube chauffant (2) du dispositif de simulation électrique, la gaine formant le métal commun des thermocouples, on remplit d'un gaz isolant pressurisé (20) l'espace entre la gaine (40) et le tube chauffant (2) et on réalise une étanchéité de l'espace rempli de gaz isolant pressurisé.

14. Procédé d'installation selon la revendication 13, selon lequel on réalise l'agencement à distance au moyen d'entretoises en matériau isolant électrique, telles que des entretoises en céramique, fixées à l'extérieur de la gaine logeant les fils soudés et montées avec jeu avec l'intérieur du tube chauffant, dans des zones dépourvues de fils.

15. Procédé d'installation selon la revendication 13 ou 14, selon lequel on réalise au préalable de l'agencement, un traitement de l'intérieur du tube chauffant et/ou de l'extérieur de la gaine de sorte à lui (leur) conférer une émissivité thermique au moins égale à 0,8.

16. Procédé d'installation selon la revendication 15, selon lequel le traitement consiste soit en un traitement d'oxydation contrôlé du tube, de préférence par chauffage en atmosphère oxydante, soit en un revêtement d'un matériau à émissivité thermique élevée, telle qu'une peinture noire.

17. Utilisation d'une canne thermométrique selon l'une des revendications 1 à 9 installée selon le procédé des revendications 13 à 16 pour détecter l'occurrence d'une crise d'ébullition.

## Patentansprüche

1. Vorrichtung zur Temperaturmessung, in der Form eines Stabthermometers (4), mit:
- mehreren temperaturempfindlichen Elementen,
- einer Schutzhülle mit einer Längsachse X, in der die temperaturempfindlichen Elemente zum Teil aufgenommen sind,
**dadurch gekennzeichnet, dass** die Schutzhülle (40) aus Metall gebildet ist und eines von zwei Metallen eines Thermoelements bildet und dass die temperaturempfindlichen Elemente aus einer Vielzahl von Fasern (4.1, 4.2, 4.3, ...) aus einem Metall bestehen, das von dem Metall der Schutzhülle verschieden ist und das andere der beiden Metalle des Thermoelements bildet, wobei eines der Enden jeder der Fasern an das Innere der Schutzhülle angeschweißt ist, so dass ein Messübergang des betreffenden Thermoelements gebildet wird, wobei die angeschweißten Enden der Fasern auf mehrere axiale und azimutale Positionen relativ zu der Achse X im Inneren der Schutzhülle verteilt sind, derart, dass eine lineare Messdichte von mehreren Punkten pro Zentimeter erreicht wird, wobei jede der Fasern die Hülle an wenigstens einem ihrer Enden verlässt.

2. Stabthermometer nach Anspruch 1, bei dem das Metall der Hülle ein Material des Typs K ist.

3. Stabthermometer nach Anspruch 1 oder 2, bei dem das Metall der Fasern ein Material des Typs K ist.

4. Stabthermometer nach Anspruch 2 in Kombination mit Anspruch 3, bei dem die Hülle aus Chromel oder einer Nickel-Chrom-Legierung wie etwas Inconel® 600 gebildet ist und die Fasern aus Alumel gebildet sind.

5. Stabthermometer nach einem der vorstehenden Ansprüche, bei dem die Fasern außer an ihren Anschlussenden von einem elektrischen Isolator umhüllt sind.

6. Stabthermometer nach Anspruch 5 in Kombination mit Anspruch 4, bei dem die Fasern aus Alumel mit einem Aluminiumdepot umhüllt sind.

7. Stabthermometer nach einem der vorstehenden Ansprüche, bei dem die Dicke der Hülle kleiner oder gleich 0,1 mm ist.

8. Stabthermometer nach einem der vorstehenden Ansprüche, bei dem der Außendurchmesser der Fasern kleiner oder gleich 0,1 mm ist.

9. Stabthermometer nach einem der vorstehenden Ansprüche, mit wenigstens einem Anschlussrohr (41), das aus dem gleichen Material wie die Hülle gebildet ist und einen größeren Außendurchmesser als diese hat, wobei das Anschlussrohr auf der Seite des Austritts der Metallfasern um die Hülle herum angelötet ist.

10. Verfahren zur Herstellung eines Stabthermometers nach einem der vorstehenden Ansprüche, mit den folgenden Schritten:
- der Länge nach Aufschneiden eines Rohres (40) aus einem Metall, das eines der beiden Metalle eines Thermoelements bildet, längs zweier Mantellinien, derart, dass zwei Halbrohre gebildet werden,
- Anschweißen eines Endes jedes der mehreren Fasern (4.1, 4.2, 4.3, ...) aus einem Metall, das eines der beiden Metalle eines Thermoelements bildet, an die Innenseite wenigstens eines Halbrohres, wobei die angeschweißten Enden der Fasern über mehrere axiale und azimutale Positionen verteilt werden,
- Wiederherstellen des Metallrohres, das die Hülle bildet, durch Schweißung an jeder der Mantellinien, wobei man die mehreren Metallfasern an wenigstens einem Ende der Hülle austreten lässt.

11. Verfahren zur Herstellung nach Anspruch 10, bei dem das Verschweißen eines der Enden der Fasern mit wenigstens einer Halbschale durch elektrische Entladung erfolgt.

12. Verfahren zur Herstellung nach Anspruch 10 oder 11, bei dem die Schweißung zur Wiederherstellung durch Punktschweißung erfolgt.

13. Verfahren zur Installation einer Vorrichtung (4) zur Temperaturmessung nach einem der Ansprüche 1 bis 9 in einer Einrichtung (1) zur elektrischen Simulation eines Nuklearbrennstabes, der wenigstens ein Rohr aus elektrisch leitendem Material aufweist, das als Heizrohr bezeichnet wird und dazu bestimmt ist, eine Flüssigkeit zu erhitzen, um das Auftreten einer Siedekrise der Flüssigkeit zu detektieren, wobei man im Inneren und in Abstand zu dem Heizrohr (2) der Einrichtung zur elektrischen Simulation die Hülle anordnet, die das gemeinsame Metall der Thermoelemente bildet, den Raum zwischen der Hülle (40) und dem Heizrohr (2) mit einem unter Druck stehenden isolierendem Gas (20) füllt und den mit isolierendem, unter Druck stehendem Gas gefüllten Raum abdichtet.

14. Verfahren zur Installation nach Anspruch 13, bei dem man die Anordnung mit Abstand mit Hilfe von Abstandshaltern aus elektrisch isolierendem Material bewirkt, wie etwa keramischen Abstandshaltern, die auf der Außenseite der Hülle befestigt sind, die die angeschweißten Fasern aufnimmt, und in den Zonen ohne Fasern mit Spiel zum Inneren des Heizrohres montiert sind.

15. Verfahren zur Installation nach Anspruch 13 oder 14, bei dem man vor der Anordnung das Innere des Heizrohres und/oder das Äußere der Hülle einer Behandlung unterzieht, die dem (den) betreffenden Bauteil(en) ein thermisches Emissionsvermögen von wenigstens 0,8 verleiht.

16. Verfahren zur Installation nach Anspruch 15, bei dem die Behandlung in einer kontrollierten Oxidationsbehandlung des Rohres, vorzugsweise durch Erhitzen in einer oxydierenden Atmosphäre, oder in einer Beschichtung mit einem Material mit hohem thermischen Emissionsvermögen wie etwa einem schwarzen Anstrich besteht.

17. Verwendung eines Stabthermometers nach einem der Ansprüche 1 bis 9, das nach dem Verfahren gemäß Ansprüchen 13 bis 16 installiert ist, zur Detektion des Auftretens einer Siedekrise.

## Claims

1. A device for detecting temperature, forming a rod thermometer (4), comprising:
- a plurality of elements sensitive to temperature; and
- a protective cladding of longitudinal axis X in which the sensitive elements are partially housed,
**characterized in that** the cladding (40) is made of a metal constituting one of the two metals of a thermocouple, and **in that** the sensitive elements consist in a plurality of wires (4.1, 4.2, 4.3...) made of a metal different from that of the cladding and constituting the other of the two metals of a thermocouple, one of the ends of each of the wires being welded to the interior of the cladding so as to form a measurement junction of a given thermocouple, the welded ends of the wires being distributed in a plurality of axial and azimuthal positions relative to the axis X in the interior of the cladding, each of the wires exiting from the cladding via at least one of its ends.

2. The rod thermometer as claimed in claim 1, wherein the metal of the cladding is a type-K material.

3. The rod thermometer as claimed in claim 1 or 2, wherein the metal of the wires is a type-K material.

4. The rod thermometer as claimed in claim 2 in combination with claim 3, wherein the cladding is either made of chromel or of a nickel/chromium alloy such as Inconel ® 600, and the wires are made of alumel.

5. The rod thermometer as claimed in one of the preceding claims, wherein the wires are covered with an electrical insulator apart from their junction ends.

6. The rod thermometer as claimed in claim 5 in combination with claim 4, wherein the wires made of alumel are covered with an alumina deposit.

7. The rod thermometer as claimed in one of the preceding claims, wherein the thickness of the cladding is smaller than or equal to 0.1 mm.

8. The rod thermometer as claimed in one of the preceding claims, wherein the outside diameter of the wires is smaller than or equal to 0.1 mm.

9. The rod thermometer as claimed in one of the preceding claims, comprising at least one adapter-tube (41) made from the same metal as the cladding and of larger outside diameter than that of the cladding, the adapter tube being brazed around the cladding at the end where the metal wires exit.

10. A process for manufacturing the rod thermometer as claimed in one of the preceding claims, comprising the following steps:
- cutting longitudinally along two opposite generatrices a tube (40) made of a metal constituting one of the two metals of a thermocouple, so as to form two half tubes;
- welding one end of each of the plurality of wires (4.1, 4.2, 4.3..) made of a metal constituting one of the two metals of a thermocouple to the interior of at least one half tube, the ends of the welded wires being distributed in a plurality of axial and azimuthal positions; and
- reconstituting the metal tube forming the cladding by welding along each generatrix while leaving the plurality of metal wires to exit via at least one of its ends.

11. The manufacturing process as claimed in claim 10, wherein the welding of one of the ends of the wires to at least one half tube is achieved by arc welding.

12. The manufacturing process as claimed in claim 10 or 11, wherein the reconstituting welding is spot welding.

13. A method for installing the temperature detecting device (4) according to one of claims 1 to 9 in a device (1) for simulating electrically a nuclear fuel rod comprising at least one tube made of an electrically conductive material, referred to as the heated tube, that is intended to heat a liquid, in order to detect the occurrence of a boiling crisis in the liquid, in which, the cladding forming the common metal of the thermocouples is arranged in the interior of the electrical simulating device and at a distance from the heated tube (2), the space between the cladding (40) and the heated tube (2) is filled with a pressurized insulating gas (20) and the space filled with pressurized insulating gas is sealed.

14. The installing method as claimed in claim 13, in which the arrangement at distance is achieved by means of spacers made of an electrically insulating material, such as ceramic spacers, that are fastened to the exterior of the cladding housing the welded wires and fitted so that there is play with the interior of the heated tube, in zones devoid of wires.

15. The installing method as claimed in claim 13 or 14, in which, before the arrangement, the interior of the heated tube and/or the exterior of the cladding is treated so as to provide it (them) with a thermal emissivity at least equal to 0.8.

16. The installing method as claimed in claim 15, in which the treatment consists either of controlled oxidation of the tube, preferably by heating in an oxidizing atmosphere, or of coating with a material having a high thermal emissivity, such as a black paint.

17. The use of a rod thermometer as claimed in one of claims 1 to 9 installed using the method of claims 13 to 16 to detect the occurrence of a boiling crisis.
